# EUROPÄISCHE PATENTSCHRIFT

(11) **EP 1 126 961 B1**
(45) Veröffentlichungstag und Bekanntmachung des Hinweises auf die Patenterteilung: **31.07.2002**
(21) Anmeldenummer: 99950744.5
(22) Anmeldetag: 15.10.1999
(51) Int. Cl.: B29C 45/16, B29C 37/00

(54) **VERFAHREN UND VORRICHTUNG ZUM HERSTELLEN EINES THERMOPLASTTEILS MIT EINGESPRITZTER ELASTOMERDICHTUNG**
PROCESS AND APPARATUS FOR MANUFACTURING A THERMOPLASTIC PART WITH AN INJECTED ELASTOMER SEAL
PROCEDE ET APPAREIL DE FABRICAGE D'UNE PIECE EN MATIERE THERMOPLASTIQUE POURVUE D'UN JOINT D'ELASTOMERE MOULE PAR INJECTION

(30) Priorität: 20.10.1998 DE 19848246
(43) Veröffentlichungstag der Anmeldung: 29.08.2001
(73) Patentinhaber: Krauss-Maffei Kunststofftechnik GmbH, 80997 München (DE)
(72) Erfinder: LICHTINGER, Peter, D-82256 Fürstenfeldbruck (DE)
(86) Internationale Anmeldenummer: EP9907821
(87) Internationale Veröffentlichungsnummer: WO0023241

(56) Entgegenhaltungen:
- EP-A- 0 017 300
- JP-A- 60 052 322
- US-A- 5 160 474
- US-A- 5 246 065
- PATENT ABSTRACTS OF JAPAN vol. 014, no. 450 (M-1030), 27. September 1990 (1990-09-27) & JP 02 179714 A (DAIKYO INC), 12. Juli 1990 (1990-07-12)
- PATENT ABSTRACTS OF JAPAN vol. 015, no. 354 (M-1155), 6. September 1991 (1991-09-06) & JP 03 140220 A (THREE BOND CO LTD), 14. Juni 1991 (1991-06-14)

## Beschreibung

Die vorliegende Erfindung betrifft ein Herstellungsverfahren für ein Thermoplastteil mit einer eingespritzten Elastomerdichtung sowie eine Spritzgießvorrichtung zur Durchführung des Verfahrens.

Thermoplastteile mit Elastomerdichtungen finden beispielsweise im Motorraum von Pkws oder als Gehäuse aller Art in der Elektroindustrie Verwendung. Oft ist es erforderlich, daß diese Teile auch nach mehreren Demontagen ihre Dichtfunktion gegen Wasser, Öl usw. zuverlässig beibehalten. Das gleiche gilt auch bei Auftreten von extremen Temperaturbelastungen. Aufgrund ihrer großen Elastizität über lange Zeiträume und auch bei hohen Temperaturen (150 - 200°C) werden sehr häufig Dichtungen aus vernetzenden Kunststoffen (z. B. Gummi oder LSR (Liquid Silicon Rubber)) verwendet. Thermoplastteile mit Dichtungen aus vernetzenden Kunststoffen sind jedoch in der Herstellung aufwendig und teuer. Da das Thermoplastteil mit einem temperierten Werkzeug (ca. 30 - 90°C) hergestellt wird, für die Herstellung von Dichtungen aus vernetzenden Kunststoffen jedoch beheizte Werkzeuge mit Temperaturen von ca. 170 - 200°C erforderlich sind, ergeben sich erhebliche Probleme, beides in einem Werkzeug oder in einem vollautomatischen Prozeß herzustellen. Außerdem sind vernetzende Kunststoffe bei der Verarbeitung im Werkzeug sehr flüssig, so daß die bei Thermoplastwerkzeugen üblichen Abdichtverfahren nicht ausreichen. Es entstehen daher mehr oder weniger große Überspritzungen. Deshalb werden im Stand der Technik die Thermoplastteile und die Gummi- oder LSR-Dichtungen in zwei getrennten Werkzeugen in unterschiedlichen Prozessen hergestellt. Die Gummi- oder LSR-Dichtungen werden dann meist in kostenaufwendiger Handarbeit in die Nuten der Thermoplastteile eingesetzt. Dabei kann das Einsetzen von Hand qualitativ sehr unterschiedlich ausgeführt werden, so daß ein relativ hoher Ausschuß-Anteil ensteht (bis zu ca. 15%).

Im Gegensatz zu vernetzenden Kunststoffen können Dichtungen aus thermoplastischen Elastomeren ohne große Probleme vollautomatisch in die Nuten der Thermoplastteile eingespritzt werden. Ein Nachteil von thermoplastischen Elastomerdichtungen ist jedoch, daß sie eine geringe oder stark nachlassende Rückstellfähigkeit besitzen. Ein wiederholtes Demontieren und Montieren von Thermoplastteilen mit Dichtungen aus thermoplastischen Elastomeren ist daher nur sehr begrenzt möglich.

Ein weiteres Problem bei Dichtungen.aus thermoplastischen Elastomeren ist, daß die Dichtung beim Handhaben des Thermoplastteils herausfallen kann, wenn sie nicht genügend Haftung an dem Thermoplastteil aufweist.

Es ist daher Aufgabe der Erfindung, ein Verfahren zur Herstellung eines Thermoplastteils, das eine eingespritzte Dichtung besitzt, die zuverlässig im Thermoplastteil gehalten ist und vorzugsweise ihre Dichteigenschaften auch bei wiederholtem Demontieren und Montieren des Thermoplastteils sowie bei Vorliegen von hohen Temperaturen beibehält zur Verfügung zu stellen, das zur Automatisierung geeignet ist.

Es ist eine weitere Aufgabe der Erfindung, eine Vorrichtung zur Durchführung dieses Verfahrens zu schaffen.

Die erste Aufgabe wird durch ein Verfahren nach Anspruch 1 gelöst.

Die Unteransprüche 2 bis 7 enthalten weitere Ausgestaltungen des erfindungsgemäßen Verfahrens.

Die zweite Aufgabe wird durch eine Vorrichtung nach Anspruch 8 gelöst.

Die Unteransprüche 9 bis 14 enthalten weitere Ausgestaltungen der Vorrichtung.

Verfahren und Vorrichtungen gemäß den Oberbegriffen von Anmspruch 1 bzw. Anspruch 8 sind in US-A-5246065, US-A-5160474, JP-A-02179741 und JP-A-03140220 beschrieben.

Ausführungsformen der Erfindung werden anhand der folgenden Figuren im einzelnen beschrieben. Es zeigt:
- Fig. 1 - 4: zeigen verschiedene nach dem erfinderischen Verfahren hergestellte Thermoplastteile. Gezeigt sind jeweils Querschnitte durch den Bereich der Nut und der Dichtung für ein Zwischenprodukt (1b,2b,3b,4b und das Endprodukt (1a, 2a, 3a, 4a).
- Fig. 5: zeigt die Herstellungsschritte für das Zwischenprodukt und das Endprodukt sowie den schematischen Aufbau der Spritzgießwerkzeuge.

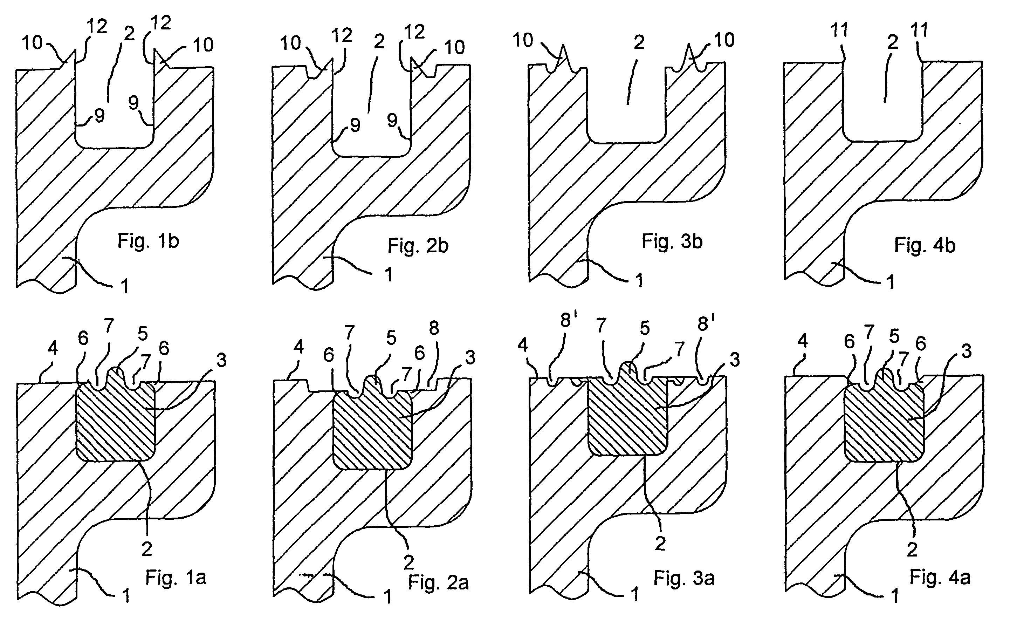

Die Figuren 1b, 2b, 3b, 4b zeigen Querschnitte eines mit dem erfinderischen Verfahren hergestellten Thermoplastteils 1 im Bereich der Dichtung 3 in verschiedenen Ausführungsformen. Die Dichtung 3, die aus einem vernetzenden Kunststoff (z. B. Gummi oder LSR) besteht, befindet sich in der Nut 2 des Thermoplastteils 1 und füllt diese vollständig aus. Die Dichtung 3 besitzt an der offenen Seite der Nut eine über die Stirnfläche 4 des Thermoplastteils vorstehende Dichtlippe 5 sowie zwei zur Dichtlippe 5 parallel verlaufende, gegenüber der Stirnfläche 4 zurücktretenden Kerbung 7. In den Ausführungsbeispielen der Fig. 1a, 2a und 4a weisen die Kanten der Nut 2 Hinterschneidungen 6 in Richtung auf das Innere der Nut 2 auf, durch die die Dichtung 3 in der Nut 2 fixiert ist. Wird eine solche Fixierung nicht benötigt, oder wird die Fixierung der Dichtung 3 in der Nut 2 durch Haftungsvermittler oder chemische Verbindung bewerkstelligt, so können die Hinterschneidungen 6 auch weggelassen werden (s. Fig. 3a). In der Stirnseite 4 des Thermoplastteiles 1 können z.B. auch Vertiefungen 8, 8' vorgesehen sein, die zur Aufnahme passender Gegenstücke dienen, um das Thermoplastteil gegen Verschieben zu sichern.

Anhand der Fig. 1a - 4a und 1b - 4b werden nun verschiedene Ausführungsformen des erfindungsgemäßen Herstellungsverfahrens für ein Thermoplastteil beschrieben. Dabei zeigen die Fig. 1b, 2b, 3b und 4b jeweils einen Zwischenschritt des Verfahrens, nämlich das Thermoplastteil 1 vor dem Einspritzen der Dichtung 3 in die Nut 2. Das Thermoplastteil 1 wird nach einem herkömmlichen Spritzgießverfahren hergestellt. Dabei wird eine Nut 2 zur Aufnahme der Dichtung 3 ausgespart. Um in einem weiteren Schritt des erfindungsgemäßen Verfahrens die Gummi- oder LSR-Dichtung ohne Überspritzungen einspritzen zu können, werden beim ersten Ausführungsbeispiel des erfindungsgemäßen Verfahrens beim Spritzen des Thermoplastteils 1 zu beiden Seiten der Nut parallel zur Nut verlaufende Dichtprofile 10 ausgeformt, die beim Einspritzen des Gummis oder LSR die Nut 2 abdichten. Die Dichtprofile 10 weisen vorzugsweise ein Spitzprofil auf. Die der Nut zugewandte Seite 12 der Dichtprofile 10 kann senkrecht verlaufen und in die Seitenwand 9 der Nut 2 übergehen (s. Fig. 1b und 2b). Die Dichtprofile 10 werden beim Schließvorgang vor dem Einspritzen des Gummis oder des LSR zum Inneren der Nut hin verformt, um die Hinterschneidungen 6 zu bilden (s. Fig. 1a und 2a). Sind keine Dichtprofile vorgesehen, werden die Nutkanten entsprechend verformt.

In einer weiteren Ausführungsform des erfindungsgemäßen Verfahrens zur Herstellung eines Thermoplastteils 1 mit einer Dichtung 3 aus einem vernetzenden Kunststoff wird die Abdichtung der Nut 2 beim Einspritzen des Gummis oder des LSR nicht durch das Thermoplastteil 1 selbst, sondern durch das Einspritzwerkzeug vorgenommen. Dazu ist das Werkzeug mit an den Verlauf der Flächen neben der Nut 2 angepaßten Dichtvorsprüngen versehen, durch welche die Nut 2 beim Einspritzen des Gummis oder des LSR abgedichtet wird. Vorzugsweise werden durch diese Dichtvorsprünge die Kanten der Nut 2 beim Schließen des Werkzeugs vor dem Einspritzen des Gummis oder des LSR zum Inneren der Nut hin verformt, um die Hinterschneidungen 6 zu bilden (s. Fig. 4).

Zum Einspritzen des vernetzenden Kunststoffs zum Bilden der Dichtung 2 wird das Werkzeug partiell am zweiten Kern beheizt. Die Temperatur dieses Bereichs beträgt dabei zwischen 170 und 230°C. Vorzugsweise ist das Heizen des Werkzeuges auf einen Bereich beschränkt, der an den Verlauf der Nut 2 angepaßt ist, und dieser Bereich ist gegenüber dem Rest des Werkzeuges thermisch isoliert, um nicht das ganze Thermoplastteil 1 der hohen Temperatur im zweiten Takt auszusetzen. Die Heizung des Werkzeuges im Bereich der Nut kann auch dazu genutzt werden, um das Verformen der Dichtprofile 10 oder der Nutkanten 11 zu erleichtern.

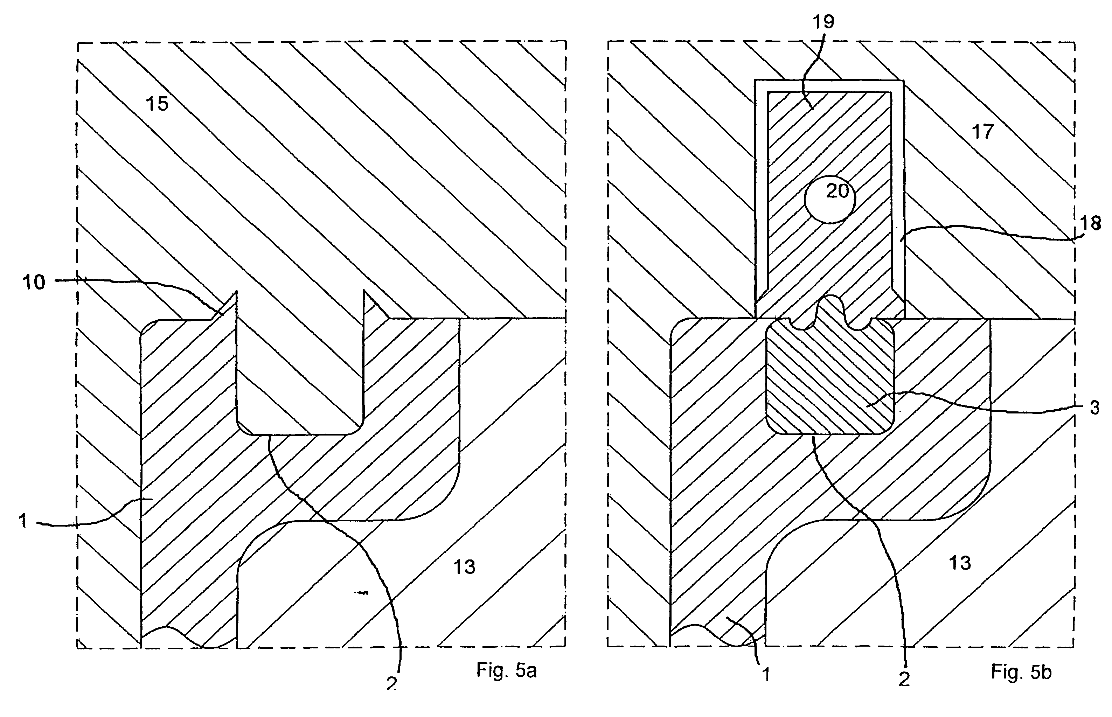

Anhand von Fig. 5 wird nachfolgend ein Ausführungsbeispiel für eine Vorrichtung zum Herstellen eines Thermoplastteils mit eingespritzter Dichtung aus einem vernetzenden Kunststoff beschrieben.

Die Vorrichtung ist ein Spritzgießwerkzeug in einer Spritzgießmaschine, vorzugsweise eine Zweikomponentenmaschine, mit einer Schließeinheit, die mindestens eine Matrize 13 und zwei Kerne 15, 17 umfaßt. Kern 15 bildet zusammen mit der Matrize 13 das Werkezug zum Spritzgießen des Thermoplastteils. Zusammen mit dem Kern 17 bildet die Matrize 13 das Werkzeug zum Einspritzen der Dichtung 3. Es kann eine automatische Einrichtung zum Transport der Thermoplastteile aus der Kavität für den ersten Takt in die Kavität für den zweiten Takt vorgesehen sein. Als eine solche Einrichtung kommen z. B. Drehtische, Roboter und Schiebematrizen in Betracht.

Der erste Kern 15 ist so geformt, daß beim Spritzgießen des Thermoplastteils die Nut 2 ausgespart wird (s. Fig. 5a). Er kann außerdem so geformt sein, daß beim Spritzgießen auch die Dichtprofile 10 ausgeformt werden. Der Kern 17 zum Einspritzen der Dichtung aus einem vernetzenden Kunststoff weist im Bereich der Nut 2 einen gegenüber dem Rest des Kerns thermisch isolierten Bereich 19 auf (Fig. 5b). Die Isolation kann z. B. über einen Isolierspalt 18 erreicht werden. Im isolierten Bereich 19 sind Heizmittel 20 vorhanden. Diese können z. B. eine elektrische Heizung oder ein Heizkanal für Heißöl sein. Der isolierte Bereich 19 kann entweder einstückig mit dem zweiten Kern ausgebildet sein oder durch einen Einschub gebildet werden, der in eine entsprechende Aussparung im zweiten Kern eingeschoben werden kann. Der Einschub kann auch aus mehreren partiellen Einschüben bestehen. Der isolierte Bereich 19 bzw. der Einschub ist so gestaltet, daß er das Formteil für die Dichtung aus einem vernetzenden Kunststoff bildet.

Die Vorrichtung zum Herstellen des Thermoplastteils mit eingespritzer Dichtung aus einem vernetzenden Kunststoff muß nicht aus einer einzigen Spritzgießmaschine bestehen. Vielmehr können die beiden Schritte Formen des Thermoplastteils und Einspritzen der Dichtung mit zwei getrennten Maschinen vorgenommen werden. Auch muß es nicht sein, daß der erste Kern 15 zum Ausformen von Dichtprofilen 10 geeignet ist. Die Dichtprofile können stattdessen auch am zweiten Kern 17 gebildet sein. Insbesondere ist es möglich, daß der isolierte Bereich 19 oder der Einschub Dichtvorsprünge besitzt, die vorzugsweise ein Spitzprofil aufweisen.

Auch sind die beschriebene Vorrichtung und das Verfahren nicht auf eine Dichtung aus vernetzenden Kunststoffen beschränkt, sondern können vorteilhafterweise auch mit thermoplastischen Kunststoffen angewendet werden.

## Patentansprüche

1. Verfahren zum Herstellen von Thermoplastteilen mit einer aus einem Elastomer bestehenden eingespritzten Dichtung mit den Schritten:
Formen eines Thermoplastteils (1) mit einer Nut (2) und Einspritzen eines Elastomers in die Nut (2), wobei vor oder während des Einspritzens zumindest eine Hinterschneidung (6) oder mehrere getrennte Hinterschneidungen (6) an einer oder beiden Nutkanten gebildet werden, durch die die Dichtung in der Nut gehalten wird, **dadurch gekennzeichnet, daß** der Werkzeugkern (17) im die Nut (2) abdeckenden Bereich (19) beim Einspritzen des Elastomers auf eine Temperatur von 170°C bis 230°C geheizt wird, und daß die übrigen Bereiche des Werkzeugkerns (17) auf einer gegenüber dem Bereich (19) niedrigen Temperatur gehalten werden.

2. Verfahren nach Anspruch 1, **dadurch gekennzeichnet, daß** beim Formen des Thermoplastteils (1) in der Nähe der Nut (2) Dichtprofile (10) einstückig mit dem Thermoplastteil (1) ausgeformt werden, die die Nut (2) beim Einspritzen des Elastomers gegen Überspritzungen abdichten und die vor oder während des Einspritzens des Elastomers so verformt werden, daß sie die Hinterschneidungen (6) bilden.

3. Verfahren nach Anspruch 2, **dadurch gekennzeichnet, daß** die Dichtprofile (10) als Spitzprofile mit relativ spitzen Querschnitt ausgeformt werden.

4. Verfahren nach Anspruch 3, **dadurch gekennzeichnet, daß** die Dichtprofile (10) mit zur Nut (2) hin senkrechtem Schenkel (12), der in die Seitenwand (9) der Nut (2) übergeht, ausgeformt werden.

5. Verfahren nach einem der Ansprüche 2 bis 4, **dadurch gekennzeichnet, daß** durch die Temperatur in der Umgebung der Nut bzw. im Bereich der Dichtprofile (10) das bleibende Verformen der Dichtprofile (10) bzw. der Kanten (11) der Nut (2) vereinfacht wird.

6. Verfahren nach einem der Ansprüche 1 bis 5, **dadurch gekennzeichnet, daß** als Elastomer ein vernetzender Kunststoff, insbesondere Gummi oder LSR eingespritzt wird.

7. Verfahren nach einem der Ansprüche 1 bis 5, **dadurch gekennzeichnet, daß** ein thermoplastisches Elastomer eingespritzt wird.

8. Spritzgießvorrichtung zum Herstellen von Thermoplastteilen mit eingespritzter Elastomerdichtung mit mindestens einer Matrize (13) und mindestens zwei Kernen (15, 17), wobei die Matrize (13) und der erste Kern (15) ein Werkzeug zum Spritzgießen eines Thermoplastteils (1) mit einer Nut (2) zur Aufnahme der Dichtung (3) bilden und die Matrize (13) zusammen mit dem zweiten Kern (17) ein Werkzeug zum Spritzgießen der Elastomerdichtung (3) in die Nut des Thermoplastteils und zum Bilden von Hinterschneidungen (6) an den Nutkanten, die die eingespritzte Elastomerdichtung in der Nut (2) halten, bilden, **dadurch gekennzeichnet, daß** der zweite Kern (17) einen auf 170°C - 230°C heizbaren, an den Verlauf der Nut (2) angepaßten Bereich (19) umfaßt, der gegen die übrigen Bereiche des Kerns thermisch isoliert ist.

9. Spritzgießvorrichtung nach Anspruch 8, **dadurch gekennzeichnet, daß** der heizbare Bereich (19) aus einem Einschub oder mehreren Teileinschüben besteht.

10. Vorrichtung nach Anspruch 8 oder 9, **dadurch gekennzeichnet daß** der erste Kern (15)so gestaltet ist, daß beim Spritzgießen des Thermoplastteils (1) in der Nähe der Nut (2) Dichtprofile (10) einstückig mit dem Thermoplastteil (1) ausgeformt werden, die die Nut (2) beim Einspritzen des Elastomers gegen Überspritzen abdichten und daß der zweite Kern (17) so ausgestaltet ist, daß diese Dichtprofile (10) vor oder während des Einspritzens des Elastomers in die Hinterschneidungen (6) umgeformt werden.

11. Vorrichtung nach Anspruch 8 oder 9, **dadurch gekennzeichnet daß** der zweite Kern (17) Dichtvorsprünge aufweist, die die Nut (2) beim Einspritzen des Elastomers gegen Überspritzen abdichten und die die Nutkante vor oder während des Einspritzens des Elastomers in die Hinterschneidungen (6) umformen.

12. Spritzgießvorrichtung nach einem der Ansprüche 8 bis 11, **dadurch gekennzeichnet, daß** sie ein Zweikomponentenwerkzeug und eine Zweikomponentenmaschine umfaßt.

13. Spritzgießvorrichtung nach einem der Ansprüche 8 bis 12, **dadurch gekennzeichnet, daß** eine Einrichtung zum automatischen Übertragen der Thermoplastteile von einer ersten Kavität für einen ersten Takt zu einer zweiten Kavität für einen zweiten Takt vorgesehen ist.

14. Spritzgießvorrichtung nach Anspruch 13, **dadurch gekennzeichnet, daß** die Einrichtung zum automatischen Transport der Thermoplastteile einen Drehtisch, einen Roboter oder eine Schiebe-Matrize umfaßt.

## Claims

1. Method for producing thermoplastic parts with an injected seal consisting of an elastomer with the following steps:
Moulding a thermoplastic part (1) with a groove (2) and injecting an elastomer into the groove (2), wherein prior to or during injection at least one undercut (6) or a plurality of separate undercuts (6) are formed on one or both groove edges, owing to which the seal is held in the groove, **characterised in that** the mould core (17) in the region (19) covering the groove (2) is heated to a temperature of 170°C to 230°C during injection of the elastomer, and **in that** the remaining regions of the mould core (17) are kept at a low temperature compared to the region (19).

2. Method according to claim 1, **characterised in that** during moulding of the thermoplastic part (1) sealing profiles (10) are integrally moulded with the thermoplastic part (1) near the groove (2), the sealing profiles sealing the groove (2) from overpackings during injection of the elastomer and being formed prior to or during injection of the elastomer in such a way that they form undercuts (6).

3. Method according to claim 2, **characterised in that** sealing profiles (10) are moulded as pointed profiles with relatively pointed cross-section.

4. Method according to claim 3, **characterised in that** the sealing profiles (10) are moulded with a leg (12) perpendicular toward the groove (2), the leg passing into the side wall (9) of the groove (2).

5. Method according to any one of claims 2 to 4, **characterised in that** the remaining forming of the sealing profiles (10) or the edges (11) of the groove (2) is simplified owing to the temperature in the vicinity of the groove or in the region of the sealing profiles (10).

6. Method according to any one of claims 1 to 5, **characterised in that** a cross-linking plastics material, in particular rubber of LSR is injected as elastomer.

7. Method according to any one of claims 1 to 5, **characterised in that** a thermoplastic elastomer is injected.

8. Injection moulding device for producing thermoplastic parts with injected elastomer seal with at least one female mould (13) and at least two cores (15, 17), the female mould (13) and the first core (15) forming a mould for injection moulding a thermoplastic part (1) with a groove (2) for receiving the seal (3) and the female die (13) together with the second core (17) forming a mould for injection moulding the elastomer seal (3) in the groove of the thermoplastic part and for forming undercuts (6) on the groove edges which keep the injected elastomer seal in the groove (2), **characterised in that** the second core (17) comprises a region (19) which can be heated to 170°C to 230°C and is adapted to the course of the groove (2) and thermally insulated against the remaining regions of the core.

9. Injection moulding device according to claim 8, **characterised in that** the heatable region (19) consists of an insert or a plurality of partial inserts.

10. Device according to claim 8 or 9, **characterised in that** the first core (15) is formed in such a way that sealing profiles (10) are integrally moulded with the thermoplastic part (1) in the vicinity of the groove (2) during injection moulding of the thermoplastic part (1), the sealing profiles sealing the groove (2) against overpacking during injection of the elastomer and **in that** the second core (17) is formed in such a way that these sealing profiles (10) are formed prior to or during injection of the elastomer into the undercuts (6).

11. Device according to claim 8 or 9, **characterised in that** the second core (17) has sealing projections which seal the groove (2) against overpacking during injection of the elastomer and which form the groove edge prior to or during injection of the elastomer into the undercuts (6).

12. Injection moulding device according to any one of claims 8 to 11, **characterised in that** it comprises a two-component mould and a two-component machine.

13. Injection moulding device according to any one of claims 8 to 12, **characterised in that** a mechanism is provided for automatically transferring the thermoplastic parts from a first cavity for a first cycle to a second cavity for a second cycle.

14. Injection moulding device according to claim 13, **characterised in that** the mechanism for automatically conveying the thermoplastic parts comprises a rotary table, a robot or a sliding female mould.

## Revendications

1. Procédé de fabrication de pièces en matière thermoplastique pourvues d'un joint élastomère moulé par injection, comportant les étapes suivantes :
moulage d'une pièce en matière thermoplastique (1) avec une gorge (2) et injection d'un élastomère dans la gorge (2), au moins une contre-dépouille (6) ou plusieurs contre-dépouilles séparées (6) étant formées avant ou pendant l'injection sur un, ou les deux, bord(s) de la gorge, permettant de maintenir le joint dans la gorge, **caractérisé en ce que** le coeur de l'outil (17) est porté à une température de 170°C à 230°C dans la zone (19) recouvrant la gorge (2) lors de l'injection de l'élastomère, et que les autres zones du coeur de l'outil (17) sont maintenues à une température plus basse comparativement à la zone (19).

2. Procédé selon la revendication 1, **caractérisé en ce que** des profils d'étanchéité (10) faisant corps avec la pièce en matière thermoplastique (1) se forment à proximité de la gorge (2) et protègent la gorge (2) contre des débordements lors de l'injection de l'élastomère, et se déforment, avant ou pendant l'injection de l'élastomère pour former les contre-dépouilles (6).

3. Procédé selon la revendication 2, **caractérisé en ce que** les profils d'étanchéité (10) ont la forme de profils pointus de section relativement petite.

4. Procédé selon la revendication 3, **caractérisé en ce que** les profils d'étanchéité (10) sont moulés avec le côté (12) à l'aplomb de la gorge (2), lequel se prolonge dans la paroi latérale (9) de la gorge (2).

5. Procédé selon l'une des revendications 2 à 4, **caractérisé en ce que** la déformation permanente du profil d'étanchéité (10) ou des bords (11) de la gorge (2) est relâchée par la température à proximité de la gorge ou dans la zone des profils d'étanchéité (10).

6. Procédé selon l'une des revendications 1 à 5, **caractérisé en ce que** l'élastomère injecté est un plastique réticulable, en particulier du caoutchouc ou du LSR.

7. Procédé selon l'une des revendications 1 à 5, **caractérisé en ce qu'**un élastomère thermoplastique est injecté.

8. Dispositif de moulage par injection pour la fabrication de pièces en matière thermoplastique pourvues d'un joint élastomère moulé par injection, avec au minimum une matrice (13) et au minimum deux parties moulantes (15,17), la matrice (13) et la première partie moulante (15) composant un outil pour le moulage par injection d'une pièce en matière thermoplastique (1) avec une gorge (2) destinée au joint (3), et la matrice (13) associée à la deuxième partie moulante (17) constituant un outil pour le moulage par injection du joint en élastomère dans la gorge de la pièce en matière thermoplastique et pour la formation de contre-dépouilles (6) sur les bords de la gorge qui retiennent le joint élastomère injecté dans la gorge (2), **caractérisé en ce que** la deuxième partie moulante (17) comprend une zone (19) adaptée au contour de la gorge (2) pouvant être chauffée à 170-230°C et isolée thermiquement du reste de la partie moulante.

9. Dispositif de moulage par injection selon la revendication 8, **caractérisé en ce que** la zone chauffable (19) est composée d'un élément insérable ou de plusieurs sous-éléments insérables.

10. Dispositif selon la revendication 8 ou 9, **caractérisé en ce que** la première partie moulante (15) est conçue de façon à ce que, lors du moulage par injection de la pièce en matière thermoplastique (1), des profils d'étanchéité (10) faisant corps avec la pièce se forment à proximité de la gorge (2) et la protègent contre les débordements au moment de l'injection de l'élastomère, et **en ce que** la deuxième partie moulante (17) est conçue de façon à ce que ces profils d'étanchéité (10) se transforment en contre-dépouilles (6) avant ou pendant l'injection de l'élastomère.

11. Dispositif selon la revendication 8 ou 9, **caractérisé en ce que** la deuxième partie moulante (17) présente des saillies d'étanchéité qui protègent la gorge (2) contre les débordements lors de l'injection de l'élastomère et transforment les bords de la gorge en contre-dépouilles (6) avant ou pendant l'injection de l'élastomère.

12. Dispositif de moulage par injection selon les revendications 8 à 11, **caractérisé en ce qu'**il comprend un outil à deux composants et une machine à deux composants.

13. Dispositif de moulage par injection selon les revendications 8 à 12, **caractérisé en ce qu'**un dispositif est prévu pour le transfert automatique de la pièce en matière thermoplastique d'une première cavité pour un premier cycle vers une seconde cavité pour un deuxième cycle.

14. Dispositif de moulage par injection selon la revendication 13, **caractérisé en ce que** le dispositif de transport automatique de la pièce en matière thermoplastique comprend une table tournante, un robot ou une matrice à tiroir.
